# EUROPEAN PATENT APPLICATION

(11) **EP 4 219 200 A1**
(43) Date of publication of application: **02.08.2023**
(21) Application number: 22154656.7
(22) Date of filing: 01.02.2022
(51) Int. Cl.: B60H 1/00

(54) **VENTILATION, HEATING AND/OR AIR CONDITIONING DEVICE**

(71) Applicant: Valeo Klimasysteme GmbH, 96476 Bad Rodach (DE)
(72) Inventor: KOCH, Peter, 96476 Bad Rodach (DE)
(74) Representative: Valeo Systèmes Thermiques

(57) **Abstract**

Ventilation, heating and/or air conditioning device (1) for a passenger compartment of a vehicle, said device (1) comprising at least one air inlet (6), at least one air outlet (8a, 8b), at least a first heat exchanger (4a), a second heat exchanger (4b) and a third heat exchanger (4c), wherein at least a part of the device (1) being separated in a left zone (12) and a right zone (14) by a partition wall (10), and the device (1) further comprises at least one opening (40) located downstream the third heat exchanger (4c) so that at least part of the flow of air present in one of the zones (14) fluidly communicates with the other zone (12).

## Description

The invention relates to a ventilation, heating and/or air conditioning device for a vehicle, and more particularly to a ventilation, heating and/or air conditioning device that regulates the temperature of a flow of air directed towards a passenger compartment of the vehicle.

Usually, the ventilation, heating and/or air conditioning device for a hybrid vehicle comprises three heat exchangers including at least one evaporator for refreshing a flow of air directed towards the passenger compartment, and two heat exchangers for heating the flow of air directed towards this passenger compartment. At least one of these two heat exchanger is an electrical heater.

The device is able to direct the flow of air in different zones of the passenger compartment. More precisely, the device is able to direct the flow of air into a front zone and into a rear zone of the passenger compartment. For that, the device comprises at least a first mixing chamber and a second mixing chamber respectively directed to the front zone and to the rear zone, and both are able to receive a cold air from the evaporator and a hot air from at least one of the two heat exchangers configured to heat the flow of air. It is understood that both of the mixing chambers are able to mix the cold air and the hot air to obtain the required temperature, a quantity of airflow being controlled by a plurality of mixing flaps. In Addition, it is known to direct the flow of air to a passenger and/or to a driver at different temperatures for one and/or the other, or more generally to a right zone and to a left zone of the passenger compartment.

In this context, it is known for a device to comprise a partition wall that separates the said device in at least the left zone and the right zone. In this way, it is possible to control the flow of air at different temperatures, adapted to the wish for example of the driver and/or passenger. Usually, the partition wall separates all of the device into the right zone and the left zone, including at least the mixing chambers and the different air paths of the device that provide the air to a determined zone. In that device, the electrical heater is crossed on one area by a right air flow and is crossed on another area by the left air flow.

When the electrical heater cannot be electrically controlled area by area, a problem arises when one of two zones is closed while the other one is opened. This may be the case when the driver is requesting hot air while the passenger don't want to receive any airflow. In that situation, there is a risk overheating phenomenon, or at least derating issues when trying to electrically control the electrical heater.

The aim of the present invention is to remedy the above-mentioned problem by proposing a ventilation, heating and/or air conditioning device which limits the overheating phenomenon, correct the derating issues and which improve the flow of air circulation within the device.

In this context, the invention relates to a ventilation, heating and/or air conditioning device for a passenger compartment of a vehicle, said device comprising at least one air inlet, at least one air outlet capable of directing the flow of air towards a right area of the passenger compartment and another air outlet capable of directing the flow of air towards a left area of the passenger compartment, the device comprising at least a first heat exchanger, a second heat exchanger and a third heat exchanger, the second heat exchanger being arranged downstream of the first heat exchanger and the third heat exchanger being arranged downstream the second heat exchanger with respect to a direction of circulation of the flow of air within the device, at least a part of the device being separated in a left zone and a right zone by a partition wall, characterized in that the device comprises at least one opening located downstream the third heat exchanger so that at least part of the flow of air present in one of the zones fluidly communicates with the other zone.

The ventilation, heating and/or air conditioning device according to the invention may be installed in a hybrid vehicle, and used for heat and/or refresh a flow of air directed to the passenger compartment. The device may comprise at least different mixing chambers allowed to mix a hot air coming from the second and/or the third heat exchanger, with a cold air coming from the first heat exchanger, the quantity of each flow of air coming in each of the mixing chambers being regulated by mixing flaps installed between the said mixing chambers and the heat exchangers of the device.

At least one advantage of the invention is that the opening of the device downstream the third exchanger limits overheating phenomenon in the device and/or derating issues. In case one zone of the device is closed while the other zone requires heat coming from the third heat exchanger, at least part of an airflow can cross a portion of the third heat located in the closed zone and can rejoin the open where air flow is circulating using the opening of the device.

According to one of the characteristics of the invention, the partition wall delimited at least a part of the opening. In a specific example, the opening is fully delimited by the partition wall.

According to one of the characteristics of the invention, the partition wall extends at least in a first area located between the first heat exchanger and the second heat exchanger and/or the partition wall extended at least in a second area that comprises at least one mixing chamber and in a third area located downstream said mixing chamber.

The partition wall can divide the device into the right zone and the left zone beginning immediately after the first heat exchanger, from an airflow point of view. The partition wall may also extend till the air outlets of the device, dividing the mixing chamber into a right mixing chamber and into a left mixing chamber. Moreover, the partition wall can extend in the third area which is a distribution space so that the partition wall separates the device into a right distribution space fluidly connected to the right mixing chamber and into a left distribution space fluidly connected to the left mixing chamber.

Moreover, the distribution space is fluidly connected to at least one of the air outlets, the flow of air into the distribution space being at a homogenous temperature after the mixing of the different flow of air in his associate mixing chamber.

According to one of the characteristics of the invention, the partition wall extends exclusively in the second area and in the third area. In other words, the partition wall is not dividing the device in the area between the first heat exchanger and the second heat exchanger.

According to one of the characteristics of the invention, the device comprises at least a first air path passing through the second and third heat exchangers and that opens into the second area, and a second air path passing through the second and the third heat exchangers and that opens into a fourth area that comprises at least another mixing chamber, the opening being made so that the first air path fluidly communicates with the second air path.

According to an example of the invention, the second area is configured to direct the flow of air to a front zone of the passenger compartment and the fourth area is configured to direct the flow of air to a rear zone of the passenger compartment. Moreover, at least each of the second and fourth area may be separate by the partition wall so that the mixing chambers of the second area could direct the flow of air to a right front zone and to a left front zone of the passenger compartment and the mixing chambers of the fourth area could direct the flow of air to a right rear zone and to a left rear zone of the passenger compartment.

According to one of the characteristics of the invention, the opening is delimited at least by a rear face of the third heat exchanger and by an edge of the partition wall.

According to an example of the invention, the opening is delimited exclusively by the rear face of the third heat exchanger and by the edge of the partition wall. In other words, the opening is a cutoff manufactured in the partition wall.

According to one of the characteristics of the invention, the opening is delimited at least by the edge of the partition wall, the rear face of the third heat exchanger and an outer wall of a housing of the device.

According to one of the characteristics of the invention, the device comprises an inter-space between the second heat exchanger and the third heat exchanger, the opening extending into the inter-space.

In others words, the flow of air circulating in a right inter-space communicate with a left inter-space.

According to one of the characteristics of the invention, the first heat exchanger is used as an evaporator and the third heat exchanger is an electrical heater. Moreover, the electrical heater is for example configured to use a voltage of at least 48V. The second heat exchanger may be a coolant heat exchanger.

According to one of the characteristics of the invention, the third heat exchanger have a uniform use between the right zone and the left zone of the device. In other words, the third heat exchanger can't be controlled separately between its left portion versus its right portion.

An object of the invention is about a vehicle comprising at least one ventilation, heating and/or air conditioning device according to any of the preceding characteristic, intended to heat or cool a right volume and/or a left volume of a passenger compartment of said vehicle.

Other characteristics, details and advantages of the invention will become clearer on reading the following description, on the one hand, and several examples of realization given as an indication and without limitation with reference to the schematic drawings annexed, on the other hand, on which :
[Fig 1] is a schematic view of a ventilation, heating and/or air conditioning device 1 for a passenger compartment of a vehicle according to the invention ;
[Fig 2] is a schematic view of the device of the figure 1, according to a first embodiment of the invention ;
[Fig 3] is a schematic view of the device of the figure 1, according to a second embodiment of the invention ;
[Fig 4] is a view of a partition wall of the device of the figure 3, according to the invention;
[Fig 5] is a schematic view of the device of the figure 1, according to a third embodiment of the invention ;
[Fig 6] is a schematic view of the device of the figure 1, according to a fourth embodiment of the invention.

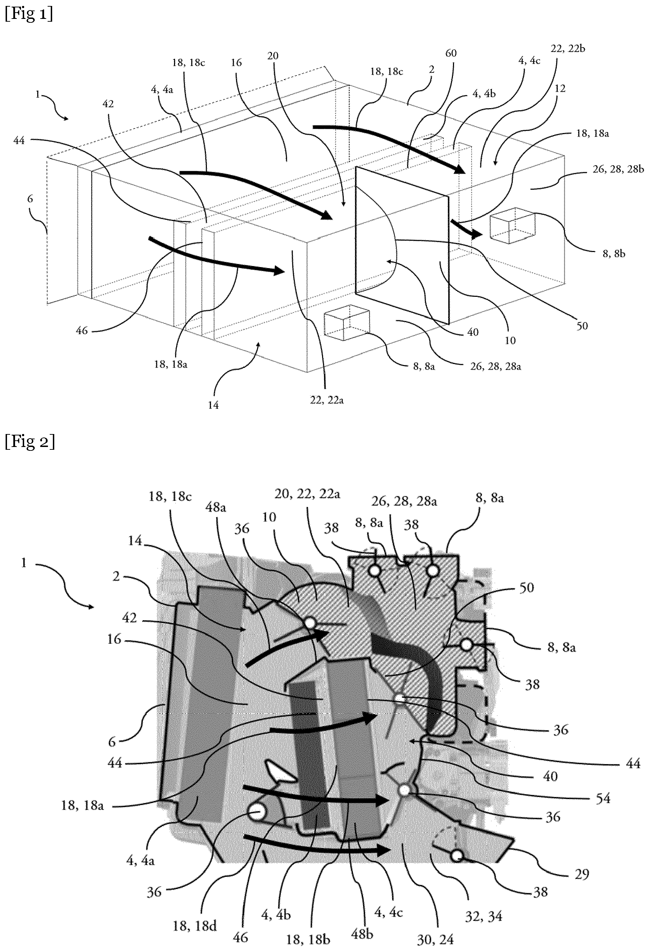

Figure 1 shows a schematic view of a part of a ventilation, heating and/or air conditioning device 1, known as HVAC, for a passenger compartment of a vehicle, specifically uses to refresh and/or heat a flow of air directed to the passenger compartment. The device 1 comprises a housing 2 in which at least three heat exchangers 4 are arranged. More precisely, the device 1 comprises a first heat exchanger 4a, for example an evaporator, a second heat exchanger 4b, for example a coolant heat exchanger, and a third heat exchanger 4c, for example an electrical heater. This electrical heater is of a uniform type, where the heat is non-separately delivered along its length.

According to the invention, the first heat exchanger 4a is use to refresh the flow of air and the second and third heat exchangers 4b, 4c are used to heat the flow of air. Moreover, the second heat exchanger 4b is arranged downstream of the first heat exchanger 4a and the third heat exchanger 4c is arranged downstream the second heat exchanger 4b. It is understood that the position of each heat exchanger 4 in relation to the other heat exchangers 4 is determine in relation to the circulation of the flow of air within the device 1.

According to a characteristic of the invention, the flow of air enters into the device 1 by at least one air inlet 6, and exit from the device 1 by at least one air outlet 8 capable of directing the flow of air toward a right volume of the passenger compartment and another air outlet 8 capable of directing the flow of air toward a left volume of the passenger compartment. More precisely, the device 1 comprises a partition wall 10 which separates at least a part of the device 1 into a left zone 12 and a right zone 14, as illustrated at the figure 1. So, it is understood that the right zone 14 comprises the at least one air outlet 8, here a right air outlet 8a, capable of directing the flow of air toward the right volume of the passenger compartment and that the left zone 12 comprises at least the other air outlet 8, here a left air outlet 8b, capable of directing the flow of air toward the left volume of the passenger compartment. The device 1 may comprise other outlets.

It should be considered that, in the invention, the third heat exchanger 4c have a uniform use over the right zone 14 and the left zone 12 of the device 1. In others words, the third heat exchanger 4c delivers the same energy simultaneously to the right zone 14 and to the left zone 12 of the device 1.

A first embodiment of the invention will now be described in accordance with the figures 1 and 2.

According to the first embodiment of the invention, the device 1 comprises a first area 16 located between the first heat exchanger 4a and the second heat exchanger 4b and fluidly connected to a first air path 18a passing through the second and third heat exchangers 4b, 4c and opening into a second area 20, comprising at least a first mixing chamber 22. Said first area 16 is fluidly connected to a second air path 18b passing through the second and the third heat exchangers 4b, 4c and opening into a second mixing chamber 24. This first area 16 is also connected to a third air path 18c bypassing the second and the third heat exchangers 4b, 4c and opening into the second area 20, in particular into the first mixing chamber 22. The first area 16 is also fluidly connected to a fourth air path 18d bypassing the second and the third heat exchangers 4b, 4c and opening into the second mixing chamber 24.

According to the invention, the second area 20 comprises at least the first mixing chamber 22, here a right first mixing chamber 22a and a left first mixing chamber 22b, separated each other by the partition wall 10. Moreover, each of the right and left first mixing chambers 22a, 22b is fluidly connected to a third area 26 located downstream said mixing chambers 22a, 22b. More precisely, the third area 26 corresponds to the distribution zone and may comprise two distribution spaces 28, here a first right distribution space 28a and a first left distribution space 28b, respectively fluidly connected to the right first mixing chamber 22a and the left first mixing chamber 22b. Thus, it is understood that according to the first embodiment of the invention, the partition wall 10 extends exclusively in the second area 20 and in the third area 26 downstream the said second area 20, et do not extend in the first area 16 of the device 1. So, the partition wall 10 separates the right first mixing chamber 22a from the left first mixing chamber 22b and the first right distribution space 28a from the first left distribution space 28b, creating a bi-zones HVAC.

The third areas 26 comprises the at least one air outlet 8 able to direct the flow of air toward the right volume of the passenger compartment, named first right air outlet 8a, and the other air outlet 8 able to direct the flow of air toward the left volume of the passenger compartment, named first left air outlet 8b. More precisely, the right first mixing chamber 22a and the first right distribution space 28a are fluidly connected to the first right air outlet 8a and the left first mixing chamber 22b fluidly connected to the first left distribution space 28b are fluidly connected to the first left air outlet 8b.

According to the invention, the second area 20 and the third area 26 are configured to direct the flow of air toward a front volume of the passenger compartment. Thereby, it is understood that the first right and left air outlets 8a, 8b are also directed toward the front volume of the passenger compartment, so that they distribute the flow of air to, for example, a driver and a passenger located in the front of the cabin, in the right and in the left volume.

The second mixing chamber 24, as illustrated in figure 2, according to the invention is a fourth area 30 of the device 1 and it participates to deliver a flow of air toward a rear volume of the passenger compartment. More precisely, the second mixing chamber 24 is fluidly connected to a fifth area 32 of the device 1, which is here a second distribution space 34. This second distribution space 34 is fluidly connected to an air exit 29 capable of directing the flow of air toward the rear volume of the passenger compartment.

According to an example of the invention, the device 1 comprises a plurality of mixing flaps 36 so that at least one mixing flap 36 is disposed between each air path 18 of the device 1 and his associate mixing chamber 22, 24. It is understood that the mixing flaps 36 are used to control a quantity of flow of air coming from each heat exchanger 4 and going into the corresponding mixing chamber 22, 24. Each mixing flap 36 is able to close the air path 18 where it is disposed to reduce the flow of air coming from one of the heat exchangers 4, or open the said air path 18 to let the integrality of the flow of air coming from one of the heat exchangers 4. It is understood that each mixing flap 36 is able to take an intermediary position between his open position and his close position. Such mixing flap is for example a butterfly flap.

It is also understood that the mixing chambers 22, 24 are configured to operate a mix of the flow of air coming directly from the first heat exchanger 4a by the third air path 18c and/or by the fourth air path 18d with the flow of air coming from the second and the third heat exchangers 4b, 4c via the first and second air paths 18a, 18b. In others words, the mixing chambers 22, 24 are aimed to regulate the temperature of the air before it arrives into the passenger compartment, by mixing the cold and hot air coming from the different heat exchangers 4 of the device 1. After the mixing, the flow of air is at the required temperature and go through the distribute spaces 28, 34, and exits from the device via the air outlets 8 as describe previously.

Moreover, and in accordance with an example of the invention, at least one, and advantageously each of the air outlet 8, 8a, 8b, 8c and at least one, and advantageously each of air exit 29 of the device may comprise a distribution flap 38 able to close or open his associate air outlet or exit 8, 29. In others words, each distribution flap 38 is able to close and open completely the air outlet 8 or is able to take any intermediary positions between its close and open positions.

According to the invention, the device 1 comprises at least one opening 40 located downstream the third heat exchanger 4c so that at least part of the flow of air present in the right zone 14 fluidly communicates with the left zone 12. Of course, the other way round is also possible where at least part of the flow of air present in the left zone 12 fluidly communicates with the right zone 12, depending on the zone which is opened versus the zone which is closed.

Moreover, according to the embodiment of the invention, the partition wall 10 delimited at least a part of the opening 40. More precisely, a first edge 50 of the partition wall 10 delimited at least a part of the opening 40. Thus, the opening 40 is made so that at least part of the flow of air present in the first air path 18a fluidly communicates with the second air path 18b, or vice-et-versa.

An advantage of this opening 40 is that, when the mixing and/or the distribution flaps 36, 38 are closed in the right or in the left zones 14, 12 of the device 1, and when the mixing and/or the distribution flaps 36, 38 are opened in the other zone 12, 14 of the device 1, the opening 40 allows a circulation of air from one zone to the other, which avoid overheating or derating phenomenon which may a consequence of air is blocked in the closed right or the left zones 14, 12 of the device 1. In others words, with the opening 40, no hot air is standing stuck in one of the right or left zones 14, 12 of the device 1 and the third heat exchanger is then always crossed by an airflow. By the way, the heat generated in the portion of the third heat exchanger that stands in the closed zone is valorized and delivered to the zone which requires heat.

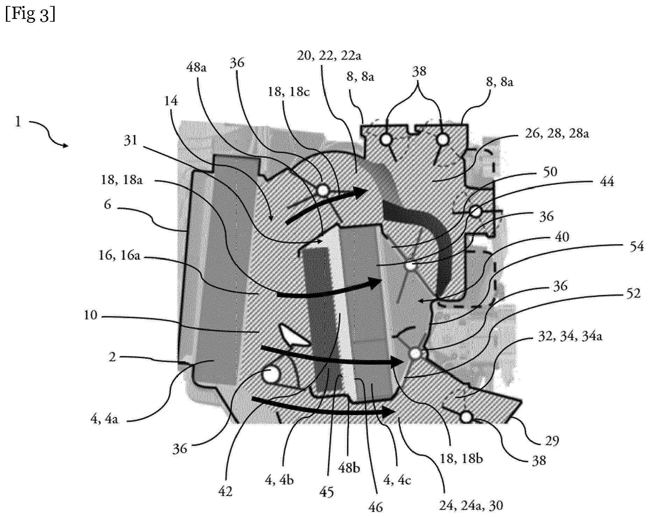

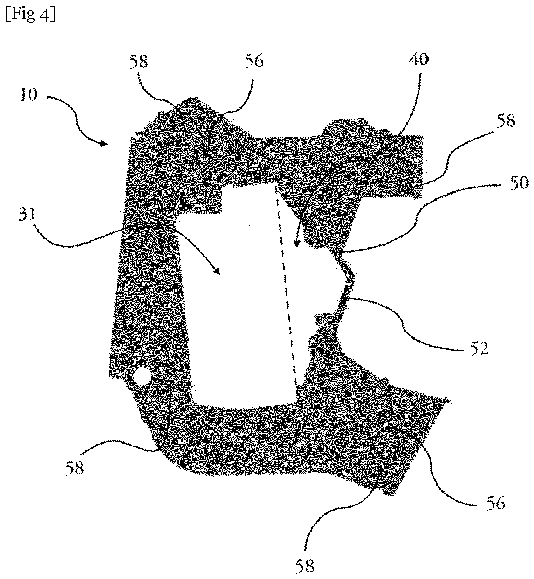

A second embodiment of the invention will now be described according to the figures 3 and 4. It should be considered that only the distinguish characteristic from the first embodiment will be described in the third embodiment and that the reader may report to the description of the first embodiment for all features that are common to these two embodiments.

In this embodiment, the partition wall 10 extends into the first area 16, into the second and third areas 20, 26 describes previously, and optionally into the fourth and fifth areas 30, 32 of the device 1. With this example of partition wall, the first path 18a, the second path 18b, the third path 18c and optionally the fourth path 18d are created immediately after the first heat exchanger, dividing the device 1 in two from the evaporator to the outlets.

So, the device 1 of the second embodiment comprises a right first area 16a and a left first area, not visible on figure 3, the right first mixing chamber 22a and the left first mixing chamber 22b, shown on figure 1, respectively fluidly connected to the first right distribution space 28a and to the first left distribution space 28b. Optionally, the device 1 of the second embodiment may comprise the right second mixing chamber 24a and the left second mixing chamber, not show, respectively fluidly connected to the second right distribution space 34a and to the second left distribution space, not show on figure 3.

It is understood that, the right second mixing chamber 24a fluidly connected to the second right distribution space 34a is fluidly connected to a second right air exit 29 able to distribute the flow of air to the rear right volume of the passenger compartment. Similarly, the left second mixing chamber fluidly connected to the second left distribution space is fluidly connected to a second left air exit, not show, able to distribute the flow of air to the left rear volume of the passenger compartment.

So, in this embodiment of the invention, the opening 40 of the device 1 is made so that only the first air path 18a and the second air path 18b are fluidly connected each other, as visible in figures 3 and 4. In others words, here, the opening 40 extends downstream the third heat exchanger 4c. An inter-space 42 located between the second heat exchanger 4b and the third heat exchanger 4c is also present and may be a part of a hole 31 that receives the second heat exchanger 4b as well as the third heat exchanger 4c. The inter-space 42 is delimited by a rear face 45 of the second heat exchanger 4b, a front face 46 of the third heat exchanger 4c, a first inner wall 48a of the housing 2 and a second inner wall 48b of the housing 2 of the device 1.

In that example, the opening 40 is delimited by the rear face 44 of the third heat exchanger 4c, the first edge 50 of the partition wall 40 located in the second area 20, a second edge 52 of the partition wall 40 located in the fourth area 30, and at least an outer wall 54 of the housing 2 of the device 1, that rejoins the first edge 50 to the second edge 52 of the partition wall 40.

The hole 31 is delimited by a front face 47 of the second heat exchanger 4b, the first and the second inner walls 48a, 48b of the housing 2 and by the rear face 44 of the first heat exchanger 4c.

As it is shown in figure 4, the partition wall 40 may comprise at least one rotation bearing 56 for at least one of the mixing flaps 36 and/or the distribution flaps 38. So, it is understood that the partition wall 40 is able to be also a support of at least some of the flaps 36, 38 of the device 1. Moreover, the partition wall 40 may comprise at least one stopper 58 associate to one of the flaps 36, 38 of the device 1. The stopper 58 is able the stop a rotation of the said flap 36, 38 in his closed or opened positions.

Figure 4 shows the opening 40 side-by-side with the hole 31 of the partition wall 10 where both the second heat exchanger 4b and the third heat exchanger 4c extends. The opening 40 and the hole 31 is here forming together an opened section, with at least a part of this opened section that is continued downstream the hole 31, forming the opening 40 of the invention.

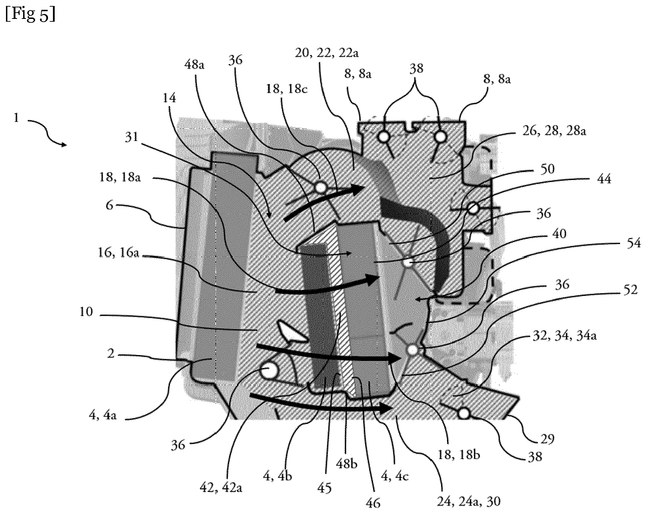

A third embodiment of the invention will know be described, according the figure 5. It should be considered that only the distinguish characteristics compared with the second embodiment will be described in the third embodiment and that the reader may report to figure 3 or 4 as well to the description of the second embodiment for all features that are common to this third embodiment.

In this third embodiment, the partition wall 40 is present in the interspace 42, between the second heat exchanger 4b and the third heat exchanger 4c, so that the device 1 comprises a right interspace 42a and a left interspace, not show. It is understood that the right interspace 42a is fluidly connected to the right first area 16a and the left interspace is fluidly connected to the left first area 16b, shown in figure 1. Thus, in this embodiment of the invention, the opening 40 is bordered by the rear face 44 of the third heat exchanger 4c, the first and second edges 50, 52 of the partition wall 40 and the outer wall 54 of the housing 2, as described previously, while a portion of the partition wall 10 is extending in the interspace 42.

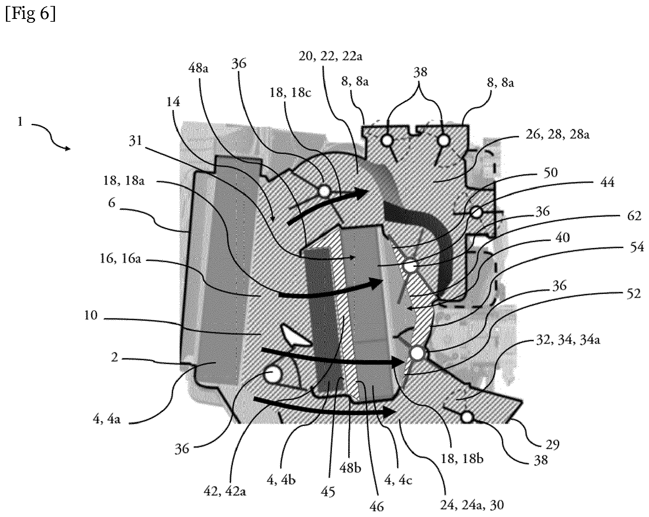

A fourth embodiment of the invention will know be described, according to the figure 6. It should be considered that only the distinguish characteristics compared to the third embodiment will be described herein, and that the reader may report to figure 5 as well to the description of the third embodiment for all features that are common to this fourth embodiment.

In this embodiment, the opening 40 is delimited exclusively by the rear face 44 of the third heat exchanger 4c and by the first and the second edges 50, 52 of the partition wall 10. More precisely, here, the first edge 50 and the second edge 52 of the partition wall 10 form a unique edge 62 of the partition wall 10 facing the rear face 44 of the third heat exchanger 4c. In other words, the partition wall comprises a strip between the opening 40 and the outer wall 54 of the housing, all along the opening 40.

The invention shall not, however, be limited to the means and configurations described and illustrated herein, and shall also extend to any equivalent means or configuration described and illustrated herein, and to any technical combination operating such means.

## Claims

1. Ventilation, heating and/or air conditioning device (1) for a passenger compartment of a vehicle, said device (1) comprising at least one air inlet (6), at least one air outlet (8a) capable of directing the flow of air towards a right area of the passenger compartment and another air outlet (8b) capable of directing the flow of air towards a left area of the passenger compartment, the device (1) comprising at least a first heat exchanger (4a), a second heat exchanger (4b) and a third heat exchanger (4c), the second heat exchanger (4b) being arranged downstream of the first heat exchanger (4a) and the third heat exchanger (4c) being arranged downstream the second heat exchanger (4b) with respect to a direction of circulation of the flow of air within the device (1), at least a part of the device (1) being separated in a left zone (12) and a right zone (14) by a partition wall (10), **characterized in that** the device (1) comprises at least one opening (40) located downstream the third heat exchanger (4c) so that at least part of the flow of air present in one of the zones (14) fluidly communicates with the other zone (12).

2. The ventilation, heating and/or air conditioning device (1) according to the preceding claim, wherein the partition wall (10) delimited at least a part of the opening (40).

3. The ventilation, heating and/or air conditioning device (1) according to one of the preceding claims, wherein the partition wall (10) extends at least in a first area (16) located between the first heat exchanger (4a) and the second heat exchanger(4b) and/or the partition wall (10) extended at least in a second area (20) that comprises at least one mixing chamber (22) and in a third area (26) located downstream said mixing chamber (22).

4. The ventilation, heating and/or air conditioning device (1) according to the preceding claim, wherein the partition wall (10) extends exclusively in the second area (20) and in the third area (26).

5. The ventilation, heating and/or air conditioning device (1) according to the claims 3 or 4, wherein the device (1) comprises at least a first air path (18a) passing through the second and third heat exchangers (4b, 4c) and that opens into the second area (20), and a second air path (18b) passing through the second and the third heat exchangers (4b, 4c) and that opens into a fourth area (30) that comprises at least another mixing chamber (24), the opening (40) being made so that the first air path (18a) fluidly communicates with the second air path (18b).

6. The ventilation, heating and/or air conditioning device (1) according to any of the preceding claims, in which the opening (40) is delimited at least by a rear face (44) of the third heat exchanger (4c) and by an edge (50, 52) of the partition wall (10).

7. The ventilation heating and/or air conditioning device (1) according to the preceding claims, wherein the opening (40) is delimited at least by the edge (50, 52) of the partition wall (10), the rear face (44) of the third heat exchanger (4c) and an outer wall (54) of a housing (2) of the device (1).

8. The ventilation, heating and/or air conditioning device (1) according to any of the preceding claims, comprising an inter-space (42) between the second heat exchanger (4b) and the third heat exchanger (4c), the opening (40) extending into the inter-space (42).

9. The ventilation, heating and/or air conditioning device (1) according to any of the preceding claims, wherein the first heat exchanger (4a) is used as an evaporator and the third heat exchanger (4c) is an electrical heater.

10. The ventilation, heating and/or air conditioning device (1) according to any of the preceding claims, wherein the third heat exchanger (4c) have a uniform use between the right zone (14) and the left zone (12) of the device (1).

11. Vehicle comprising at least one ventilation, heating and/or air conditioning device (1) according to any of the preceding claims, intended to heat or cool a right volume and/or a left volume of a passenger compartment of said vehicle.
